# EUROPÄISCHE PATENTANMELDUNG

(11) **EP 4 130 125 A1**
(43) Veröffentlichungstag der Anmeldung: **08.02.2023**
(21) Anmeldenummer: 22183190.2
(22) Anmeldetag: 05.07.2022
(51) Int. Cl.: C08J 11/10, C08K 9/10, C08K 3/012, C08K 5/00

(54) **GESTEUERTER POLYMERKETTENABBAU DURCH MIKROVERKAPSELTE SUBSTANZEN**

(30) Priorität: 04.08.2021 DE 102021208433
(71) Anmelder: ContiTech AG, 30165 Hannover (DE)
(72) Erfinder: Wietzke, Steffen, 30165 Hannover (DE); Biensfeld, Daniel, 30165 Hannover (DE)
(74) Vertreter: Continental Corporation

(57) **Zusammenfassung**

Die vorliegende Erfindung betrifft eine Zusammensetzung, umfassend mindestens ein Polymer und mindestens eine Mikrokapsel, wobei die mindestens eine Mikrokapsel eine Kapselwand und ein Kapselinneres umfasst, wobei in dem Kapselinneren mindestens eine Substanz vorliegt, dadurch gekennzeichnet, dass die mindestens eine Substanz derart gewählt ist, dass die mindestens eine Substanz in der Lage ist das mindestens eine Polymer abzubauen und/oder zu depolymerisieren, einen Formkörper, umfassend diese Zusammensetzung und ein Verfahren zum Abbau und/oder zur Depolymerisation dieses Polymers.

## Beschreibung

Die vorliegende Erfindung betrifft eine Zusammensetzung, umfassend mindestens ein Polymer und mindestens eine mit mindestens einer Substanz gefüllte Mikrokapsel, einen Formkörper, umfassend diese Zusammensetzung und ein Verfahren zum Abbau und/oder zur Depolymerisation dieses Polymers.

Eine effektive Kreislaufwirtschaft im Bereich polymerer Werkstoffe stellt einen wesentlichen Beitrag dar, um die weltweiten Klimaziele zu erreichen sowie den Eintrag von Kunststoffabfällen in die Umwelt einzudämmen.

Bei Polymeren gibt es prinzipiell zwei Möglichkeiten des Recyclings. Erstens chemisches Recycling, d.h. stoffliche Rückführung der Polymerketten auf die Bausteine Oligomere oder Monomere bzw. deren Ausgangsstoffe und zweitens mechanisches Recycling, wobei aus den polymeren Werkstoffen/Werkstoffverbünden durch mechanische (z. B. Mahlen) und thermische Aufbereitung (Schmelzen) die Polymeren wieder als Zusätze neuen Compounds zugeführt oder zu 100% recycelt werden. Dabei kommt es zu mechanisch oder thermisch bedingtem (unkontrolliertem) Abbau der Kettenlänge.

Darüber hinaus gewinnt in letzter Zeit die enzymatische Recyclingtechnologie an Bedeutung, mit der Kunststoffabfall, z. B. jede Art von PET-Kunststoffabfall, in seine Grundbestandteile (Monomere) zerlegt werden kann, die dann wieder zur Herstellung von neuem Kunststoff in der Qualität von Primärrohstoff zum Einsatz kommen können.

Es wird ferner derzeit damit experimentiert, Kunststoffe derart zu modifizieren, dass diese Sollbruchstellen aufweisen. Beispielsweise PE mit Orthoestern und Phosphaten als Sollbruchstellen. Diese Molekülbruchstücke können dann von Bakterien verarbeitet werden.

Die derzeit wohl gängigste Form des chemischen Recyclings ist die sogenannte Pyrolyse, eine kontrollierte thermische Zersetzung von Polymeren. Dieser Prozess findet typischerweise bei hohen Temperaturen von 450-700°C unter einer inerten Atmosphäre statt, damit der Kunststoff nicht verbrennt. Die derzeitige Einschränkung des Prozesses ist, dass dieser in den meisten Fällen eine Mischung aus Wachsen, Oligomeren, Ungesättigten, Aromaten und Alkanen erzeugt - mit anderen Worten, er weist eine schlechte Selektivität in Bezug auf die Monomerproduktion auf und eignet sich am besten für die Produktion von Kraftstoffen aus Kunststoffabfällen.

Eine weitere Möglichkeit ist das hydrothermale Cracken, bei dem der Kunststoff durch katalysierte thermische Prozesse und Dampf aufgespalten wird. Die Temperatur des Prozesses ist mit 350 bis 550°C etwas niedriger, aber auch hier entsteht ein Produktgemisch, von dem nur ein Teil für das Recycling zu Kunststoff geeignet ist. Das Recycling von gemischten Kunststoffabfällen auf diese Weise kann zusätzliche Technologien erfordern, da der Kunststoff teilweise Additive enthält.

Beide Prozesse benötigen viel Energie und zeigen eine begrenzte Selektivität.

Das mechanische Recycling führt nicht nur zu einer undefinierten Kettenlänge(nverteilung), i.d.R. geht damit ein Downcycling zu polymeren Werkstoffen mit schlechterem (mechanischen) Eigenschaftsprofil einher, sondern es macht oftmals auch eine sortenreine Trennung schwierig bis unmöglich. Meist lassen sich überhaupt nur sortenreine Kunststoffe mechanisch recyclen. Ausnahme sind sortenreine Gebrauchsgegenstände wie PS-Becher oder aber PET, das aufgrund seiner ursprünglich sehr hohen Molmasse häufig noch als technische Faser verwendet werden kann.

Zeitpunkt und Umfang des Polymerkettenabbaus lassen sich materialintrinsisch nicht steuern und sind bislang nur durch die genannten Verfahren und in externen Maschinen, Anlagen oder/und Reaktoren möglich. Ohne externe Schritte oder durch natürliche Einflüsse (bioabbaubare Polykondensate) werden die Polymere nur sehr langsam sowie bei speziellen äußeren Bedingungen abgebaut und verschmutzen die Umwelt ((marine) littering).

Werden in das polymere Compound Sollbruchstellen oder Agentien eingebaut bzw. eingemischt, findet der Kettenabbau ggf. zu früh statt und kann zu Bauteilversagen im Einsatz führen.

Damit weisen die gängigen Verfahren zum Recycling von Polymeren insbesondere Nachteile hinsichtlich des Energiebedarfs und der Steuerung der erhaltenen Produkte auf und sind in dieser Hinsicht verbesserungsbedürftig.

Aufgabe der vorliegenden Erfindung war es daher ein polymeres Material bereitzustellen, wobei der Zeitpunkt und Umfang des Polymerkettenabbaus bestmöglich steuerbar, und wobei dieser Polymerkettenabbau möglichst energieeffizient möglich ist.

Diese Aufgabe wird überraschenderweise durch eine Zusammensetzung gemäß Anspruch 1 gelöst, d. h. durch eine Zusammensetzung, umfassend mindestens ein Polymer und mindestens eine Mikrokapsel, wobei die mindestens eine Mikrokapsel eine Kapselwand und ein Kapselinneres umfasst, wobei in dem Kapselinneren mindestens eine Substanz vorliegt, die dadurch gekennzeichnet ist, dass diese mindestens eine Substanz derart gewählt ist, dass diese mindestens eine Substanz in der Lage ist das mindestens eine Polymer abzubauen und/oder zu depolymerisieren.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Sofern nicht anders bezeichnet, beziehen sie alle Normen, Standards und Richtlinien jeweils auf die am Anmeldetag aktuellen und gültigen.

Bei der erfindungsgemäßen Zusammensetzung handelt es sich vorzugsweise um eine Kunststoffzusammensetzung.

Im Kontext der vorliegenden Erfindung bedeutet "Depolymerisation" eine Sequenz von chemischen Reaktionen in denen ein Polymer in seine Monomere bzw. geeignete Bausteine (Molmasse < Molmasse des Polymers) zerlegt wird. Diese können anschließend wieder zu Makromolekülen zusammengesetzt werden. Somit stellt die Depolymerisation im Wesentlichen die Umkehrung der Polymerisation dar und kann in Kombination mit Polymerisationen als Methode zum Recycling von Kunststoffen eingesetzt werden (chemisches Recycling).

Im Gegensatz dazu bezeichnet der "Abbau" eines Polymer nicht die Abspaltung eines einzelnen Monomers, sondern die Brechung der Polymerkette an einer beliebigen Stelle des Rückgrats unter Bildung von zwei - meist immer noch polymeren - Bruchstücken. Wird der Abbau lang genug weitergeführt, so liegt das Polymer wie bei der Depolymerisation in Form seiner Monomere vor und diese können anschließend auch wieder zu Makromolekülen zusammengesetzt werden.

Bei der Zusammensetzung handelt es sich im Kontext der vorliegenden Erfindung vorzugsweise um eine Kunststoffzusammensetzung. Diese kann fest oder flüssig, vorzugsweise aber fest sein.

Bei der Mikroverkapselung handelt es sich vorzugsweise um eine Technik, mit der Substanzen mit Hilfe einer Hülle in dem Kapselinneren (Matrix) immobilisiert und durch Zerstörung dieser Hülle oder durch Permeation durch diese gezielt bzw. verzögert freigesetzt werden können.

Unter Mikroverkapselung versteht man ferner vorzugsweise die Umhüllung von Flüssigkeitströpfchen oder Feststoffteilchen zu Mikrokapseln von etwa 1 µm bis 5000 µm Durchmesser.

Dazu sind im Hinblick auf die zu verkapselnde Substanz sowie die Verwendung der Kapseln spezielle Verfahren entwickelt worden. Die Hülle aus natürlichen oder synthetischen Polymeren kann dabei dicht, permeabel oder semipermeabel gestaltet werden. Somit ergibt sich eine Fülle von Möglichkeiten, eine eingekapselte, reaktive Substanz z. B. durch Zerstören der Hülle oder durch Permeation gesteuert freizugeben oder auch Reaktionen im Inneren der Mikrokapseln ablaufen zu lassen. Durch Mikroverkapselung können viele Substanzen in einer neuen Zubereitung - in sehr feiner Feststoff-Verteilung mit sehr großer Oberfläche und neuartiger Dosierbarkeit - ihrer Nutzanwendung zugeführt werden.

Grundlegendes zur Mikroverkapselung ist beispielsweise der Publikation W. Sliwka, Angewandte Chemie, 1975, 87, 16, zu entnehmen, deren Inhalt hiermit vollständig einbezogen ist.

Gemäß der vorliegenden Erfindung liegen demnach mindestens eine Mikrokapsel und mindestens ein Polymer in einer Zusammensetzung vor.

Die mindestens eine Mikrokapsel weist eine Kapselwand und ein Kapselinneres auf, wobei in dem Kapselinneren mindestens eine Substanz vorliegt, wobei diese mindestens eine Substanz derart gewählt ist, dass diese mindestens eine Substanz in der Lage ist das mindestens eine Polymer abzubauen und/oder zu depolymerisieren.

Ist die Mikrokapsel demnach intakt, so ist die mindestens eine Substanz, die in der Lage ist das mindestens eine Polymer abzubauen und/oder zu depolymerisieren, in der Mikrokapsel eingeschlossen und kann nicht auf das mindestens eine Polymer wirken.

Sobald die Kapselwand geöffnet wird, kann die mindestens eine Substanz, die in der Lage ist das mindestens eine Polymer abzubauen und/oder zu depolymerisieren, aus der Mikrokapsel entweichen und auf das mindestens eine Polymer einwirken.

Damit die mindestens eine Substanz, die in der Lage ist das mindestens eine Polymer abzubauen und/oder zu depolymerisieren aus der Mikrokapsel entweichen und auf das Polymer einwirken kann, wird die Kapselwand geöffnet.

Damit die Kapselwand nicht vorzeitig geöffnet wird, ist die Kapselwand ohne weitern Stimulus vorzugsweise inert gegen die mindestens eine Substanz, die in der Lage ist das mindestens eine Polymer abzubauen und/oder zu depolymerisieren.

Ein besonderer Vorteil der Erfindung liegt darin, dass Oligomere oder Monomere durch gesteuerten Kettenabbau (Zeitpunkt und Umfang bzw. Kettenlänge) zum Ende der Produkt-/Bauteillebenszeit aus den Polymeren wiedergewonnen und neuen polymeren Werkstoffen zugeführt werden können. Die Rückführung auf Monomere oder Oligomere bedeutet, dass damit wieder gezielt Kettenlängen(verteilungen) eingestellt werden können, ohne den energetischen Umweg eines Kreislaufes über Rohstoffe zur Monomersynthese zu gehen.

Zudem führt ein interner/externer Stimulus dazu, dass die Mikroverkapselung die abbauende/depolymerisierende Substanz zu einem kontrollierten Zeitpunkt freisetzt und sich der Abbau bzw. die Depolymerisation damit steuern lässt und somit erst nach Nutzungsende des Lebenszyklus des Polymers eingeleitet wird.

In einer Ausführungsform ist die Mikrokapsel vorzugsweise dadurch gekennzeichnet, dass die Kapselwand aus mindestens einem Kapselwandpolymer, mindestens einem Lipid, mindestens einem Polysaccharid, mindestens einem Protein und/oder mindestens einem anorganischen Wandmaterial aufgebaut ist.

In einigen Ausführungsformen ist das Kapselwandpolymer ausgewählt aus der Gruppe bestehend aus natürlichen, teilsynthestische oder synthetischen Polymeren, Gummen, Polysacchariden, wie Stärken oder modifizierte Stärken, Pektinen und Agaren. Ferner geeignet sind Biopolymere, wie Proteine, Peptide und/oder Nukleinsäuren.

Besonders geeignet sind Substanzen, die bioabbaubar sind oder/und sich zur Wieder- oder Weiterverwertung segregieren lassen, unter anderem aber nicht ausschließlich Polysaccharide, Peptide und/oder natürliche Polymere.

Die Kapselwand kann aus Lipiden aufgebaut sein. Lipide und Lipoide sind Sammelbezeichnungen für ganz oder zumindest größtenteils wasserunlösliche (hydrophobe) Naturstoffe. Lipide werden in der Regel in sieben Stoffklassen eingeteilt: Fettsäuren, Triglyceride (Fette und fette Öle), Wachse, Phospholipide, Sphingolipide, Lipopolysaccharide und Isoprenoide (Steroide, Carotinoide etc.).

Bevorzugt sind membranbildende Lipide, die einen hydrophilen und einen hydrophoben Teil besitzen - also amphiphil sind. Dies erlaubt es ihnen je nach Beschaffenheit entweder Mizellen (kugelförmige Aggregate aus amphiphilen Molekülen, die sich in einem Dispersionsmedium spontan zusammenlagern) oder Doppellipidschichten zu bilden.

Die Mikrokapseln können über bekannte Verfahren hergestellt werden.

Diese können in physikalische (z. B. Sprühtrocknung), physikalisch-chemische (z. B. Koazervation) und chemische Verfahren (z. B. Polymerisation) unterteilt werden. Siehe hierzu Ozkan et. al., Food Chemistry 272 (2019) 494-506, deren Inhalt hiermit vollständig einbezogen ist.

Unter die genannten Verfahren fällt zum Beispiel, aber nicht ausschließlich das chemische Verfahren der in-situ Polymerisation. Vorzugsweise werden hierbei die einzuschließenden Agenzien und mindestens ein Monomer, das als Baustein für das späte Wandmaterial genutzt wird, in eine hydrophobe Phase eingebracht, die wiederum in wässriger Lösung emulgiert wird. In dieser wässrigen Lösung ist vorzugsweise mindestens ein weiteres Monomer gelöst oder dispergiert. Die beiden Monomere können gezielt polymerisiert werden, z. B. radikalisch oder durch Kondensation und bilden das polymere Wandmaterial der Mikrokapseln. Diese können abschließend durch gängige Trennverfahren separiert werden und anschließend als Additiv in andere Polymercompounds eingemischt werden.

Die erfindungsgemäße Zusammensetzung ist ferner vorzugsweise dadurch gekennzeichnet, dass die Kapselwand durch einen internen oder externen Stimulus geöffnet werden kann.

Unter Stimulus wird jeder Reiz oder Einfluss auf die Kapselwand der Mikrokapsel verstanden, der eine Öffnung der Kapselwand induziert.

Mit Öffnung wird vorzugsweise jedwede Änderung des Zustandes der Kapselwand bezeichnet, die es der mindestens einen Substanz, die in der Lage ist das mindestens eine Polymer abzubauen und/oder zu depolymerisieren, erlaubt aus dem Kapselinneren zu entweichen.

Dabei kann die Kapselwand vorzugsweise teilweise oder vollständig zerstört werden. Es können aber auch Poren und/oder Löcher in der Kapselwand erzeugt werden, die ein Entweichen der Substanz, die in der Lage ist das mindestens eine Polymer abzubauen und/oder zu depolymerisieren, ermöglichen.

Unter internem Stimulus wird vorzugsweise ein interner Mechanismus ("Zeitgeber") verstanden, also ein Mechanismus der zusammen mit der Substanz, die in der Lage ist das mindestens eine Polymer abzubauen und/oder zu depolymerisieren, in der Mikrokapsel oder in der Kapselwand vorliegt und mit zeitlicher Verzögerung die Öffnung der Kapselwand bewirkt. Die zeitliche Verzögerung ist vorzugsweise einstellbar.

Vorzugsweise wird die Kapselwand durch einen internen Stimulus geöffnet, wobei der interne Stimulus eine stark verlangsamte chemische Reaktion oder biologische Prozesse, vorzugsweise ein Bakterienwachstum, sein kann, die zu einer Öffnung nach einer eingestellten Zeitspanne führen. Im Beispiel eines verlangsamten Wachstums von Bakterien kann die Population eine kritische Zahl erreichen, ab der die Kapselwand angegriffen und geöffnet wird. Als Beispiel für eine chemisch verlangsamte Reaktion ist der Einsatz eines chemischen Puffersystems möglich, bei dem ab einem kritischen Umsatz zu einer Säure die Pufferwirkung nicht mehr genügt und die Säure die Kapselwand angreift und öffnet.

Unter externem Stimulus wird vorzugsweise ein externer Einfluss verstanden, der von außerhalb der Mikrokapsel auf diese und insbesondere auf die Kapselwand einwirkt und die Öffnung der Kapselwand bewirkt.

Vorzugsweise wird die Kapselwand durch einen externen Stimulus geöffnet, wobei der externe Stimulus einen chemischen Stimulus, einen mechanischen Stimulus, einen thermischen Stimulus, einen elektrischen Stimulus, einen dielektrischen Stimulus, einen biologischen Stimulus und/oder einen strahlungsinduzierten Stimulus umfasst.

Der chemische Stimulus kann beispielsweise eine pH-Wert Änderung, den Einfluss eines Lösungsmittels und/oder eine Hydrolyse umfassen.

Der mechanische Stimulus kann beispielsweise eine Scherung, eine Kompression und/oder eine Vibration (z. B. durch Ultraschall) umfassen.

Der thermische Stimulus kann beispielsweise eine Erwärmung oder Abkühlung umfassen, insbesondere eine Wärmestrahlung oder Wärme erzeugt über elektromagnetische Felder (Mikro- oder Millimeterwellen), sowie die Dissipation elektrischer oder mechanischer Energie (z. B. Reibung).

Der elektrische Stimulus kann beispielsweise einen Durchschlag oder ein elektromagnetisches DC- oder AC-Feld umfassen. Zum Beispiel können sich die Makromoleküle einer Hülle aus einer Art Flüssigkristallpolymer (Liquid-Crystall Polymer, kurz LCP) im anliegenden elektrischen Gleichspannungsfeld auf mikroskopischen Skalen ausrichten und damit die Poren für den Auslass der Substanzen vergrößern,

Der dielektrische Stimulus kann beispielsweise eine Resonanz oder Oszillation im elektromagnetischen Wechselfeld (z. B. eine einfallenden EM-Welle) umfassen. Beispielsweise lassen sich Mikrokapseln (Durchmesser von ca. 5 µm), in deren Wände goldbeschichtete Kobaltnanopartikel eingearbeitet sind (Durchmesser von ca. 3 nm), durch äußere Magnetfelder einer Feldstärke von 1200 Oersted bei Frequenzen von 100 Hz bis 300 Hz für die eingeschlossenen Substanzen durchlässig machen oder gar zerstören, da die Nanopartikel im magnetischen Wechselfeld rotieren. Im genannten Beispiel passierte Dextran als Beispiel für ein Makromolekül (Biopolysaccharid) die Hülle der Mikropkapseln.

Siehe hierzu Langmuir 2005, 21, 5, 2042-2050, deren Inhalt hiermit vollständig einbezogen ist.

Der biologische Stimulus kann beispielsweise das Einwirken eines Enzyms oder eines Mikroorganismus umfassen.

Beispielsweise konnte kürzlich für ein Polyethylenterephthalat gezeigt werden, dass ein Enzym, gebildet vom Bakterium *Ideonella sakaiensis*, hydrolytisch die Polymerketten spalten kann.

Siehe hierzu Tournier, V., Topham, C.M., Gilles, A. et al. An engineered PET depolymerase to break down and recycle plastic bottles. Nature 580, 216-219 (2020) , deren Inhalt hiermit vollständig einbezogen ist.

Der strahlungsinduzierte Stimulus kann beispielsweise die Bestrahlung mit verschiedenen Frequenzen, z. B. im UV-Bereich, umfassen.

Dabei ist das Kapselmaterial beispielsweise besonders photosensitiv, d. h. die Ketten zerfallen unter UV-Strahlung, d.h. photoinduziert, und geben den Inhalt der Mikrokapsel frei.

Der Stimulusmechanismus ist vorzugsweise unabhängig von dem Polymer, das depolymerisiert und/oder abgebaut werden soll.

Damit gelten alle Stimulusmechanismen auch in Zusammenhang mit allen Polymeren, die depolymerisiert und/oder abgebaut werden sollen, hiermit als auch in jeder möglichen Kombination offenbart.

Das mindestens eine Polymer in der erfindungsgemäßen Zusammensetzung ist im Wesentlichen nicht beschränkt, sondern kann alle synthetischen, teilsynthetischen oder natürlichen Polymere umfassen.

Das mindestens eine Polymer kann thermoplastisch oder duroplastisch sowie elastomer oder nicht elastomer sein.

Die erfindungsgemäße Zusammensetzung ist ferner vorzugsweise dadurch gekennzeichnet, dass das mindestens eine Polymer ausgewählt ist aus der Gruppe, umfassend Cellulose, polymerer Schwefel, Polyurethan, Polystyrol, Polyolefine, wie Polyethylen oder Polypropylen aber auch Polybutadien, Acrylnitril-Butadien-Styrol-Copolymer, Polyethylenterephtalat, Polybutylenterephtalat, Polyamid, Polyphthalamid, Polyketon, Polyvinylchlorid, Polyacrylat, Polyoxymethylen, Polyethersulfon, Polyphenylensulfid, Polyetheretherketon, Ethylen-Tetrafluorethylen, chlorierte Fluorkunststoffe,Tetrafluorethylen-Hexafluorpropylen-Vinylidenfluorid-Terpolymere, Polyvinylidenfluorid, Polyvinylidendifluorid, Perfluoralkoxy-Polymere, Tetrafluorethylen-Hexafluorpropylen-Copolymere, Polytetrafluorethylen, Epoxy-basierten Kunststoffe, Polycarbonate, Phenol-Formaldehydharze, Polyacrylnitrile, Polycaprolactone, Polyester, Polyimide, Polylactide, Polymethylpente, Polyhydroxyalkanoat, Polyvinylacetat, Polyvinylbutyral, Acrylatkautschuke, Ethylen-Vinylacetat-Kautschuke, Chlorsulfonierte Polyethylene, Chlorierte Polyethylene, Epichlorhydrin-Kautschuke, Chloroprenkautschuke, Polyisopren Fluorkautschuke, Styrol-Butadien-Kautschuke, Isobutylen-Isopren-Kautschuke, halogenierte Isobutylen-Isopren- Kautschuke, Acrylnitril-Butadien-Kautschuke, teilhydrierte oder vollständig hydrierte Acrylnitrilbutadien-Kautschuke, Ethylen-Propylen-Dien-Kautschuke, Ethylen-Propylen- Kautschuke, Naturkautschuke, Silikonkautschuke und/oder Verschnitte oder Copolymere davon. Ebenfalls geeignet sind Biopolymere, wie Polysaccharide, wie Stärke oder modifizierte Stärke, Pektine, Gelatine, Agar, Lignin, Nukleinsäure, Peptide und/oder Proteine.

Besonders bevorzugt sind Cellulose, Polyurethan, Polyolefine, wie Polyethylen oder Polypropylen aber auch Polybutadien, Acrylnitril-Butadien-Styrol-Copolymer, Polyethylenterephtalat, Polybutylenterephtalat, Polyamid, Polyphthalamid, Polyketon, Polyvinylchlorid, Polyacrylat, Polyoxymethylen, chlorierte Fluorkunststoffe,Tetrafluorethylen-Hexafluorpropylen-Vinylidenfluorid-Terpolymere, Polyvinylidenfluorid, Polyvinylidendifluorid, Tetrafluorethylen-Hexafluorpropylen-Copolymere, Polytetrafluorethylen, Epoxy-basierten Kunststoffe, Polycarbonate, Polyester, Polyimide, Polylactide, Polyhydroxyalkanoat, Polyvinylacetat, Acrylatkautschuke, Ethylen-Vinylacetat-Kautschuke, Chlorsulfonierte Polyethylene, Chlorierte Polyethylene, Epichlorhydrin-Kautschuke, Chloroprenkautschuke, Polyisopren Fluorkautschuke, Styrol-Butadien-Kautschuke, Isobutylen-Isopren-Kautschuke, halogenierte Isobutylen-Isopren- Kautschuke, Acrylnitril-Butadien-Kautschuke, teilhydrierte oder vollständig hydrierte Acrylnitrilbutadien-Kautschuke, Ethylen-Propylen-Dien-Kautschuke, Ethylen-Propylen- Kautschuke, Naturkautschuke, Silikonkautschuke und/oder Verschnitte oder Copolymere davon.

Die mindestens eine Substanz, die in der Lage ist das mindestens eine Polymer abzubauen und/oder zu depolymerisieren, ist im Wesentlichen nicht beschränkt, sondern kann alle Substanzen umfassen, die den Abbau und/oder die Depolymerisation eines bestimmten Polymers induzieren können.

Dem Fachmann ist klar, dass nicht jede Substanz mit jedem Polymer kompatibel ist. Der Fachmann wird die Substanz, die in der Lage ist das mindestens eine Polymer abzubauen und/oder zu depolymerisieren, mit Hinblick auf das jeweils abzubauende bzw. zu depolymerisierende Polymer wählen.

Die erfindungsgemäße Zusammensetzung ist ferner vorzugsweise dadurch gekennzeichnet, dass die mindestens eine Substanz eine Säure, eine Base, ein Katalysator, einen Initiator, ein Nucelophil, ein Elektrophil, ein Enzym und/oder einen Mikroorganismus umfasst.

Bevorzugt sind zum Beispiel starke Basen, wie NaOH, die beispielsweise Polykondensate, wie Polyester, depolymerisieren könne.

In einer anderen Ausführungsform umfasst die Substanz einen Initiator, bevorzugt einen Radikalstarter, der eine radikalische Depolymeristaion in einem Polymer induzieren kann.

In einer anderen Ausführungsform umfasst die Substanz ein Enzym oder einen Mikroorganismus, das/der in der Lage ist Bindungen in dem Polymer zu spalten. Je nach Enzym oder Mikroorganismus kann hierbei ein Abbau oder eine Depolymerisation des Polymers induziert werden.

Die erfindungsgemäße Zusammensetzung ist ferner vorzugsweise dadurch gekennzeichnet, dass die mindestens eine Mikrokapsel eine Größe im Bereich von etwa 1 µm bis etwa 5000 µm, vorzugsweise von 1 µm bis 100 µm, besonders bevorzugt von 1 µm bis 20 µm, aufweist.

Solche Größen haben den Vorteil, dass die Eigenschaften des polymeren Compounds, insbesondere die mechanischen (z. B. Flexibilität, Reißdehnung, Schlägzähigkeit) nicht so stark beeinflusst werden, dass die technisch benötigten Eigenschaften der Anwendung nicht signifikant beeinflusst werden.

Es ist zu beachten, dass der Bereich von 1000 bis 5000 µm nicht mehr im Mikrometerbereich liegt, aber dennoch im Kontext dieser Erfindung unter Mikrokapsel subsumiert werden soll.

Die Größe der Mikrokapseln kann beispielsweise mittels Lichtmikroskopie, dynamischer Lichtstreuung, Laserbeugung, Rasterelektronenmikroskop, Photosedimentation oder Siebanalyse bestimmt werden und betrifft vorzugsweise die zahlengemittelte mittlere Größe.

Die erfindungsgemäße Zusammensetzung ist ferner vorzugsweise dadurch gekennzeichnet, dass die Kapselwand eine Dicke von 100 nm bis 800 nm aufweist.

Solche Dicken haben den Vorteil, dass die Mikrokapseln klein genug sind, dennoch genug Volumen umschließen und gleichzeitig ausreichende Stabilität für mikromechanische Beanspruchung in technischen Hochleistungscompounds besitzen.

Die erfindungsgemäße Zusammensetzung ist ferner vorzugsweise dadurch gekennzeichnet, dass die Mikrokapseln in einer Menge von größer als 0 bis 5 Gew.-%, vorzugsweise von größer als 0 bis 1 Gew.-%, bezogen auf das Gesamtgewicht der Zusammensetzung, in der Zusammensetzung enthalten sind.

Die erfindungsgemäße Zusammensetzung ist ferner vorzugsweise dadurch gekennzeichnet, dass die mindestens eine Substanz, die in der Lage ist das mindestens eine Polymer abzubauen und/oder zu depolymerisieren und die in den Mikrokapseln vorliegt, in einer Menge von größer als 0 bis 2.Gew.-%, vorzugsweise von größer als 0 bis 1 Gew.-%, bezogen auf das Gesamtgewicht der Zusammensetzung, in der Zusammensetzung enthalten ist.

Die Zusammensetzung kann ferner in der Kunststoffindustrie übliche Additive aufweisen. Diese umfassen beispielsweise Additive, ausgewählt aus der Gruppe, bestehend aus Füllstoffen, wie z. B. Siliziumdioxid (Silica/Kieselsäure), Kaolin, Glimmer, Graphit, Carbon Nanotubes, Kohlefasern, Ruß, Fettsäuren (wie z. B. Palmitin- oder Stearinsäure), Weichmachern (wie z. B. mineralisches Weißöl oder Ester-Weichmacher), Gleitmitteln, Polyethylenglycol, Geruchsabsorbern, antimikrobiellen Substanzen, detektierbaren Füllstoffen (wie z. B. Eisenpartikel oder Magnetit), organischen und anorganischen Farbpigmenten (wie z. B. Titandioxid), Haftvermittlern, Verarbeitungshilfsmitteln, Flammschutzmitteln (wie z. B. Mg(OH)₂, Al(OH)₃, Gips, Intumeszenz-Verbindungen wie Blähgraphit), Alterungsschutzmitteln, Metalloxiden und Metallhydroxiden und Metallcarbonaten, Verzögerern, Aktivatoren, Faktis und/oder Vernetzungsmitteln.

Die vorliegende Erfindung betrifft ferner einen Formkörper, umfassend eine Zusammensetzung, umfassend mindestens ein Polymer und mindestens eine Mikrokapsel, wobei die mindestens eine Mikrokapsel eine Kapselwand und ein Kapselinneres umfasst, wobei in dem Kapselinneren mindestens eine Substanz vorliegt, der dadurch gekennzeichnet ist, dass die mindestens eine Substanz derart gewählt ist, dass die mindestens eine Substanz in der Lage ist das mindestens eine Polymer abzubauen und/oder zu depolymerisieren.

Dabei gelten alle Definitionen und bevorzugten Ausführungsformen, die für die erfindungsgemäße Zusammensetzung definiert wurden, analog für den erfindungsgemäßen Formkörper.

Formkörper umfassen vorzugsweise Schläuche (Schlauchschichten), Rohre, Krümmern, Dichtungen (z. B. Dichtringe und -scheiben), Strukturbauteile (z. B. Querlenker, Armaturenbrettträger), Gehäuse, Kugelschalen, Verkleidungen (bevorzugt für Innenräume), Oberflächenbeschichtungen, Fördergurte, (Antriebs-riemen, Reifen, Rohrverbinder, Achsmanchetten, Dämpfungselemente, Luftfedern, Faltenbälge und/oder Kolben.

Die vorliegende Erfindung betrifft ferner ein Verfahren zum Abbau und/oder zur Depolymerisation eines Polymers, umfassend die Schritte:
- Bereitstellen einer Zusammensetzung, umfassend mindestens ein Polymer und mindestens eine Mikrokapsel, wobei die mindestens eine Mikrokapsel eine Kapselwand und ein Kapselinneres umfasst, wobei in dem Kapselinneren mindestens eine Substanz vorliegt, dadurch gekennzeichnet, dass diese mindestens eine Substanz derart gewählt ist, dass diese mindestens eine Substanz in der Lage ist das mindestens eine Polymer abzubauen und/oder zu depolymerisieren, und
- Ausüben eines internen und/oder externen Stimulus auf die Zusammensetzung, um die Kapselwand zu öffnen und die mindestens eine Substanz in Kontakt mit dem mindestens einen Polymer zu bringen, um den Abbau und/oder die Depolymerisation des Polymers zu induzieren.

Dabei gelten alle Definitionen und bevorzugten Ausführungsformen, die für die erfindungsgemäße Zusammensetzung definiert wurden analog für das erfindungsgemäße Verfahren.

Das so erhaltene abgebaute oder depolymerisierte Polymer liegt nach Durchführung des erfindungsgemäßen Verfahrens vorzugsweise in Form seiner Monomere bzw. geeigneter Bausteine (Molmasse < Molmasse des Polymers) zerlegt vor. Diese können anschließend wieder zu Makromolekülen zusammengesetzt werden.

Die Erfindung wird anschließend durch nicht beschränkende Beispiele näher erläutert.

### Beispiel

Ein technisches Produkt, umfasst eine Zusammensetzung bestehend aus einem Polyamid, in den eine durch Mikroverkapselung immobilisierte starke Base, NaOH, eingebracht ist. Diese Mikroverkapselung ist so konzipiert, dass sie bei höheren Temperaturen (von über 180° C) zerstört wird.

Wird das technische Produkt einmalig auf diese Temperatur erhitzt, wird durch Zerstörung der Kapselung NaOH freigesetzt und das Polymer durch eine Polymerabbaureaktion gezielt abgebaut.

## Patentansprüche

1. Zusammensetzung, umfassend mindestens ein Polymer und mindestens eine Mikrokapsel, wobei die mindestens eine Mikrokapsel eine Kapselwand und ein Kapselinneres umfasst, wobei in dem Kapselinneren mindestens eine Substanz vorliegt, **dadurch gekennzeichnet, dass** die mindestens eine Substanz derart gewählt ist, dass die mindestens eine Substanz in der Lage ist das mindestens eine Polymer abzubauen und/oder zu depolymerisieren.

2. Zusammensetzung gemäß Anspruch 1, **dadurch gekennzeichnet, dass** die Kapselwand aus mindestens einem Kapselwandpolymer, mindestens einem Lipid, mindestens einem Polysaccharid, mindestens einem Protein und/oder mindestens einem anorganischen Wandmaterial aufgebaut ist

3. Zusammensetzung gemäß irgendeinem der vorhergehenden Ansprüche, **dadurch gekennzeichnet, dass** die Kapselwand durch einen internen oder externen Stimulus geöffnet werden kann.

4. Zusammensetzung gemäß irgendeinem der vorhergehenden Ansprüche, **dadurch gekennzeichnet, dass** die Kapselwand durch einen internen Stimulus geöffnet werden kann, wobei der interne Stimulus eine stark verlangsamte chemische Reaktion oder biologische Prozesse, vorzugsweise ein Bakterienwachstum, sein kann, die zu einer Öffnung nach einer eingestellten Zeitspanne führen.

5. Zusammensetzung gemäß irgendeinem der vorhergehenden Ansprüche, **dadurch gekennzeichnet, dass** die Kapselwand durch einen externen Stimulus geöffnet werden kann, wobei der externe Stimulus einen chemischen Stimulus, einen mechanischen Stimulus, einen thermischen Stimulus, einen elektrischen Stimulus, einen dielektrischen Stimulus, einen biologischen Stimulus und/oder einen strahlungsinduzierten Stimulus umfasst.

6. Zusammensetzung gemäß irgendeinem der vorhergehenden Ansprüche, **dadurch gekennzeichnet, dass** das mindestens eine Polymer ausgewählt ist aus der Gruppe, umfassend Cellulose, Polyurethan, Polyolefine, wie Polyethylen oder Polypropylen aber auch Polybutadien, Acrylnitril-Butadien-Styrol-Copolymer, Polyethylenterephtalat, Polybutylenterephtalat, Polyamid, Polyphthalamid, Polyketon, Polyvinylchlorid, Polyacrylat, Polyoxymethylen, chlorierte Fluorkunststoffe,Tetrafluorethylen-Hexafluorpropylen-Vinylidenfluorid-Terpolymere, Polyvinylidenfluorid, Polyvinylidendifluorid, Tetrafluorethylen-Hexafluorpropylen-Copolymere, Polytetrafluorethylen, Epoxy-basierten Kunststoffe, Polycarbonate, Polyester, Polyimide, Polylactide, , Polyhydroxyalkanoat, Polyvinylacetat, Acrylatkautschuke, Ethylen-Vinylacetat-Kautschuke, Chlorsulfonierte Polyethylene, Chlorierte Polyethylene, Epichlorhydrin-Kautschuke, Chloroprenkautschuke, Polyisopren Fluorkautschuke, Styrol-Butadien-Kautschuke, Isobutylen-Isopren-Kautschuke, halogenierte Isobutylen-Isopren- Kautschuke, Acrylnitril-Butadien-Kautschuke, teilhydrierte oder vollständig hydrierte Acrylnitrilbutadien-Kautschuke, Ethylen-Propylen-Dien-Kautschuke, Ethylen-Propylen- Kautschuke, Naturkautschuke, Silikonkautschuke und/oder Verschnitte oder Copolymere davon.

7. Zusammensetzung gemäß irgendeinem der vorhergehenden Ansprüche, **dadurch gekennzeichnet, dass** die mindestens eine Substanz eine Säure, eine Base, ein Katalysator, ein Initiator, ein Nucelophil, ein Elektrophil, ein Enzym und/oder einen Mikroorganismus umfasst.

8. Zusammensetzung gemäß irgendeinem der vorhergehenden Ansprüche, **dadurch gekennzeichnet, dass** die Mikrokapsel eine Größe im Bereich von etwa 1 µm bis etwa 5000 µm, vorzugsweise von 1 µm bis 100 µm, besonders bevorzugt von 1 µm bis 20 µm, aufweist.

9. Zusammensetzung gemäß irgendeinem der vorhergehenden Ansprüche, **dadurch gekennzeichnet, dass** die Kapselwand eine Dicke von 100 nm bis 800 nm aufweist.

10. Formkörper, umfassend die Zusammensetzung, gemäß irgendeinem der vorhergehenden Ansprüche.

11. Verfahren zum Abbau und/oder zur Depolymerisation eines Polymers, umfassend die Schritte:
- Bereitstellen einer Zusammensetzung, gemäß irgendeinem der Ansprüche 1 bis 9, und
- Ausüben eines internen und/oder externen Stimulus auf die Zusammensetzung, um die Kapselwand zu öffnen und die mindestens eine Substanz in Kontakt mit dem mindestens einen Polymer zu bringen, um den Abbau und/oder die Depolymerisation des Polymers zu induzieren.
